(19) Europäisches Patentamt

European Patent Office

Office européen des brevets

(11) **EP 2 087 247 B1**

(12) **FASCICULE DE BREVET EUROPEEN**

(45) Date de publication et mention de la délivrance du brevet:
**27.06.2012   Bulletin 2012/26**

(21) Numéro de dépôt: **07847854.2**

(22) Date de dépôt: **05.12.2007**

(51) Int Cl.:
*F16C 11/12* *(2006.01)*       *F16M 11/12* *(2006.01)*
*G02B 7/02* *(2006.01)*        *G02B 7/182* *(2006.01)*

(86) Numéro de dépôt international:
**PCT/EP2007/063364**

(87) Numéro de publication internationale:
**WO 2008/068287 (12.06.2008 Gazette 2008/24)**

(54) **LIAISON ANNULAIRE LINEAIRE SANS ENTRETIEN ET DISPOSITIF COMPORTANT AU MOINS UNE TELLE LIAISON**

WARTUNGSFREIE, LINEAR-RING-VERBINDUNG UND MINDESTENS EINE SOLCH EINE VERBINDUNG UMFASSENDE VORRICHTUNG

MAINTENANCE-FREE LINEAR ANNULAR CONNECTION AND DEVICE COMPRISING AT LEAST ONE SUCH CONNECTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **07.12.2006   FR 0655373**

(43) Date de publication de la demande:
**12.08.2009   Bulletin 2009/33**

(73) Titulaire: **Commissariat à l'Énergie Atomique et aux Énergies Alternatives
75015 Paris (FR)**

(72) Inventeurs:
• **FAYOLLAS, Philippe
  33110 Le Bouscat (FR)**
• **MACIAS, François
  33380 Mios (FR)**

(74) Mandataire: **Ilgart, Jean-Christophe
  BREVALEX
  95 rue d'Amsterdam
  75378 Paris Cedex 8 (FR)**

(56) Documents cités:
  WO-A-85/05464      WO-A-03/087944
  US-A- 5 110 195      US-A1- 2005 030 604

**Description**

**DOMAINE TECHNIQUE ET ART ANTÉRIEUR**

La présente invention se rapporte à une liaison de type linéaire annulaire sans entretien et à des dispositifs comportant au moins une telle liaison, par exemple des dispositifs optiques nécessitant des réglages précis.
Une liaison selon le préambule de la revendication 1 est connue du document WO 85/05464.
Dans l'état de la technique, il est souvent requis de pouvoir régler la position d'un composant par rapport à un support, le composant étant fixé au support par plusieurs liaisons. Pour cela, les liaisons doivent autoriser plusieurs degrés de liberté en rotation et ou en translation. A cet effet, on utilise de manière traditionnelle des liaisons rotules associées à d'autres liaisons permettant d'autres degrés de liberté pour assurer un mouvement pur, comme par exemple une rotation.
La liaison rotule ou sphérique assure une liaison entre deux éléments permettant la rotation autour de trois axes, de l'un des éléments par rapport à l'autre. Le plus souvent, la liaison rotule comporte une sphère mâle et une siège femelle avec ou sans jeu, mais aussi des roulements pour de petits débattements. Ces rotules fonctionnent par glissement ou par roulement, en interposant des billes entre l'élément mâle et l'élément femelle de la liaison. Cette liaison est très efficace, cependant elle nécessite un entretien, notamment un graissage du fait des frottements plus ou moins importants selon la charge appliquée à la liaison, ou pour éviter le grippage des roulements (à bille par exemple). De plus pour obtenir une liaison rotule sans jeu, il est nécessaire d'appliquer des efforts sur les pièces (tête sphérique mâle et siège sphérique femelle) par des systèmes à ressort, et en appliquant des précontraintes sur les billes pour les rotules à billes. Dans tous les cas, il apparaît une usure inévitable et mal contrôlée qui requiert une maintenance régulière. Par ailleurs, si la liaison n'est pas actionnée pendant une longue période, celle-ci risque de gripper, par matage ou par manque de lubrification.
Par conséquent, les liaisons à rotules de l'état de la technique sont de structure relativement complexe, requiert une fabrication particulièrement soignée, puisqu'un ajustement entre les différents éléments est requis, et ont donc un coût de fabrication élevé. Par ailleurs, elles nécessitent un entretien régulier, pour assurer leur tenue dans le temps. Enfin, ces liaisons sont sensibles aux éléments extérieurs.
Par ailleurs, lorsque l'on souhaite réaliser une liaison linéaire annulaire, i.e. une liaison ayant trois axes de rotation et un axe de translation, il est nécessaire d'adjoindre à la liaison rotule telle que décrite précédemment une autre liaison mécanique pour assurer la translation. On obtient alors une liaison dont la fabrication est encore plus complexe, d'un encombrement important et combinant les inconvénients de chacune des liaisons.
En outre, dans le cas d'un dispositif optique comportant un support, un composant optique (et des actionneurs permettant de régler la position angulaire du composant par rapport au support, on cherche lors du réglage angulaire, réalisé par l'intermédiaire d'actionneurs, à ce que le composant optique ne se déforme pas de plus de quelques dixièmes de microns. Pour cela, il est nécessaire que les liaisons rotules n'engendrent pas de couple résistant important sur le support, qui transmettrait la déformation sur le composant optique.
Afin de minimiser cette transmission d'effort, une solution serait d'utiliser des rotules parfaites, i.e. des rotules sans frottement avec un support qui maintiendrait le composant optique de manière quelconque et avec des interfaces absorbant les déformations dues aux déplacements linéaires des actionneurs, car dans ce cas, les moteurs ont une capacité de charge axiale, radiale et transversale limitée. Cela suppose donc de disposer de rotules presque parfaites, dont les frottements sont très réduits ou comportant des roulements très précis. Ce type de rotule outre son coût important, est très sensible à l'usure et nécessite un entretien.
C'est donc un but de la présente invention d'offrir une liaison linéaire annulaire de conception simple pour des mouvements de relativement petite amplitude, sans entretien et de coût de revient inférieur à celui des liaisons de l'état de la technique.

**EXPOSÉ DE L'INVENTION**

Le but précédemment énoncé est atteint par une liaison comportant une tige apte à se déformer pour offrir trois degrés de liberté en rotation, et une embase sensiblement perpendiculaire à la tige, dont la déformation dans la direction de l'axe de la tige offre un degré de liberté en translation.
En d'autres termes, on réalise une liaison dont tous les éléments sont fixes les uns par rapport aux autres et on utilise la déformation des matériaux pour obtenir les mouvements de rotation et de translation requis. La liaison étant destinée à permettre des mouvements de faible amplitude, il est possible d'utiliser la déformabilité du matériau pour réaliser ces mouvements, sans risquer de détériorer la liaison, les mouvements sollicitant peu la liaison en elle-même. Pour cela, les matériaux utilisés pour réaliser la liaison offre une haute limite élastique.
Dans le cas d'un dispositif optique, on rend isostatique le maintien du composant optique dans son support, par exemple par des appuis sur trois points et on utilise des liaisons imparfaites qui sont déformables pour de petits déplacements, qui peuvent éventuellement transmettre un couple parasite, qui n'est pas gênant pour le réglage.

Dans un exemple particulier de réalisation, l'embase comporte une zone centrale amincie sur laquelle est fixée la tige, cette zone étant alors apte à se déformer élastiquement selon l'axé de la tige du fait de sa faible épaisseur.

La présente invention a alors principalement pour objet une liaison destinée à raccorder un premier et un deuxième élément, apte à autoriser de petits déplacements entre les premier et deuxième éléments, ladite liaison étant formée par au moins un matériau apte à se déformer élastiquement, ladite liaison comportant une partie centrale de faible dimension transversale apte à se déformer élastiquement en flexion et en torsion et des première et deuxième parties d'extrémités fixées à des extrémités longitudinales de ladite partie centrale, au moins la première partie d'extrémité étant apte à se déformer élastiquement dans une direction longitudinale reliant les extrémités longitudinales de la partie centrale, ladite liaison formant une liaison linéaire annulaire.

Dans un exemple avantageux de réalisation, la partie centrale est une tige et la première partie d'extrémité, formant une embase, comporte une zone centrale amincie relativement à une zone périphérique, la tige étant fixée à cette zone amincie.

La zone périphérique est avantageusement de forme tronconique dont la plus grand base est orientée du côté de la tige, la zone périphérique formant une couronne autour de la zone amincie, ce qui permet d'obtenir un très bon maintien de la liaison avec un effort de serrage réduit.

La liaison selon la présente invention peut comporter un manchon rigide monté avec jeu autour de la partie centrale.

La partie centrale peut, par exemple être réalisée en corde à piano et être fixée aux première et deuxième parties d'extrémité, par exemple par soudage, en particulier par brasage.

La liaison est par exemple réalisée en acier, par exemple en acier à ressort, notamment en acier 45SCD6.

Le ou les matériaux composant la liaison selon la présente invention ont de préférence une limite élastique supérieure à 1120-1400 MPa.

La présente invention a également pour objet un dispositif comportant un support et un composant fixé au support et apte à être déplacé par rapport au dit support, ledit composant étant fixé au dit support par au moins une liaison selon l'invention, ladite liaison étant encastrée par une extrémité dans le support et à une autre extrémité dans le composant.

Le composant peut avantageusement être fixé au support par trois liaisons selon l'invention, ce qui permet d'obtenir un maintien relativement rigide, tout en offrant une certaine souplesse.

Le composant peut également être fixé au support par au moins une liaison selon l'invention et au moins une liaison formée par une tige encastrée à une extrémité dans le support et à une extrémité dans le composant.

Avantageusement, le dispositif selon l'invention comporte au moins un actionneur disposé entre une extrémité d'une liaison et le support, ledit actionneur étant destiné à déplacer ladite extrémité de la liaison par rapport au support.

Dans un exemple de réalisation, le composant est de forme rectangulaire, deux liaisons étant fixées à un premier côté du composant et une liaison étant fixée sur un deuxième côté opposé au premier côté, cette répartition en triangle permet d'obtenir une fixation isostatique et rigide du composant sur le support, réduisant la sensibilité du dispositif aux vibrations extérieures.

Les deux liaisons du même côté peuvent être montées sur des actionneurs pour permettre le réglage en position du composant par rapport au support.

Les actionneurs sont, par exemple du type linéaire.

Par exemple, la première partie d'extrémité est fixée sur le composant ou sur le support par serrage de ladite première partie d'extrémité au moyen d'un écrou dans un alésage du composant ou du support et l'autre partie d'extrémité est fixée par vissage dans un alésage du support ou du composant.

L'alésage recevant la première partie d'extrémité comporte avantageusement un fond de forme tronconique correspondant à celle de la première partie d'extrémité de la liaison selon un exemple de réalisation de l'invention, permettant d'obtenir une immobilisation sûre avec une force de serrage réduite. Par ailleurs la coopération de ces formes permet un auto-centrage facilité.

Le composant est par exemple un composant optique.

La présente invention a également pour objet un procédé de fabrication d'un dispositif selon la présente invention, comportant les étapes de :

    a) fixation d'au moins une liaison sur le composant,
    b) fixation de la liaison sur le support.

Lors de l'étape b), au moins un actionneur est fixé sur le support entre la liaison et le support.

Le composant peut comporter une monture et un élément monté dans la monture, dans ce cas le procédé selon la présente invention prévoit lors de l'étape a), que les liaisons soient fixées sur la monture de l'élément en l'absence de l'élément, l'élément étant monté dans la monture après la fixation des liaisons sur le support.

Le composant peut ensuite être mis en position horizontale, puis incliné dans la position d'utilisation, l'élément étant ensuite bridé sur la monture.

**BRÈVE DESCRIPTION DES DESSINS**

La présente invention sera mieux comprise à l'aide de la description qui va suivre et des dessins annexés, sur lesquels :

- la figure 1 est une vue en coupe longitudinale schématique d'un premier mode de réalisation d'une liaison selon la présente invention,
- la figure 2A est une vue en perspective de trois quart d'un dispositif optique mettant en oeuvre la liaison de la figure 1,
- la figure 2B est une vue de dessus du dispositif de la figure 2A,
- la figure 2C est une vue schématique de côté du dispositif de la figure 2A,
- la figure 3 est un détail d'une vue en coupe du dispositif optique de la figure 2A le long de l'axe de la liaison selon la présente invention, le dispositif étant représenté incliné par rapport à la direction verticale,
- la figure 4 est une vue en coupe longitudinale schématique d'un autre mode de réalisation d'une liaison à trois degrés de liberté,
- les figures 5A à 5C sont des représentations schématiques des mouvements que peut faire la liaison selon la présente invention,
- la figure 6 est une représentation schématique du dispositif de la figure 2A, le composant étant dans une première position,
- la figure 7 est une représentation schématique du dispositif de la figure 2A, le composant étant dans une deuxième position,
- la figure 8 est une vue en coupe longitudinale d'un deuxième exemple de réalisation d'une liaison selon la présente invention,
- les figures 9A, 10A, 11A et 12A sont des vues de la liaison de la figure 1 dans différents états de déformation et les figures 9B, 10B, 11B et 12B sont des vues de la liaison de la figure 8 dans les mêmes états de déformation,
- la figure 13 est une représentation schématique en coupe d'une variante de la liaison de la figure 8,
- la figure 14 est une vue en perspective d'un détail du dispositif de la figure de la figure 2A.

**EXPOSÉ DÉTAILLÉ DE MODES DE RÉALISATION PARTICULIERS**

Dans la description qui va suivre, nous décrirons la liaison en relation avec un dispositif optique, mais la présente invention peut être appliquée à tout type de dispositif nécessitant des mouvements de faibles amplitudes ; des exemples de tels dispositifs seront donnés plus loin.

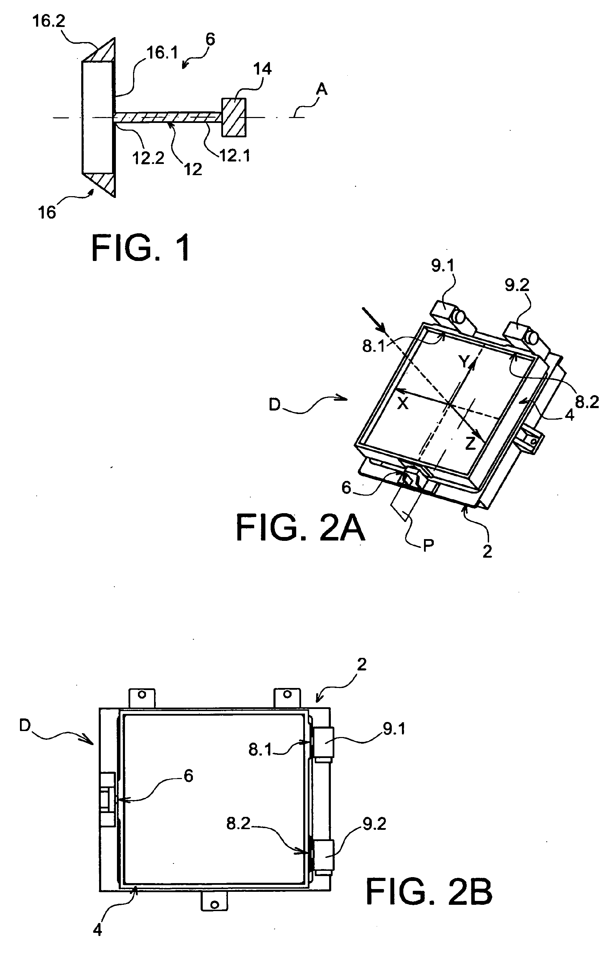

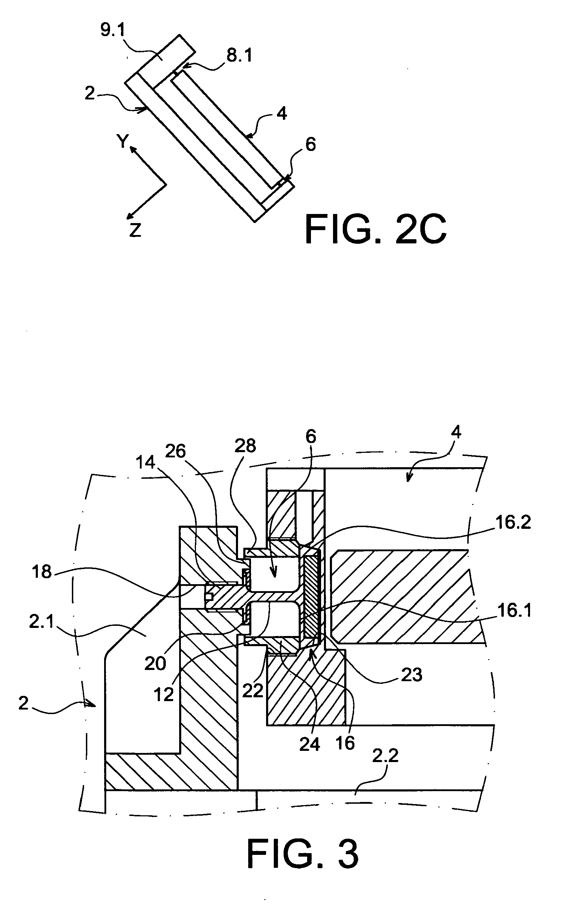

Sur la figure 2A, on peut voir un dispositif optique D apte à mettre en oeuvre au moins une liaison selon la présente invention.

Le dispositif D comporte un support 2 destiné à former une base de référence et au moins un composant optique 4. Dans l'exemple représenté, le support 2 a la forme d'un cadre et un seul composant optique 4 est prévu ; celui-ci a sensiblement la forme d'une plaque.

Le composant 4 est suspendu au cadre au moyen de trois liaisons 6, 8.1, 8.2, deux liaisons 8.1, 8.2 dites actives, fixées chacune par une extrémité à un actionneur 9.1, 9.2 solidaire du support 2, les actionneurs 9.1, 9.2 étant aptes à appliquer un déplacement selon des axes des rotations X et Y au composant 4, et une liaison dite passive 6 qui assure uniquement le maintien du composant 4.

Les actionneurs sont par exemple du type moteur pas à pas, ayant à titre d'exemple une résolution de l'ordre de 0,5 $\mu$m.

Dans l'exemple représenté, les trois liaisons 6, 8.1, 8.2 sont du type selon la présente invention. Cependant il est envisageable de prévoir que seulement une ou deux parmi les trois liaisons 6, 8.1, 8.2 soient du type connu, comme une liaison rotule classique associée si nécessaire à une liaison glissière.

Sur la figure 1, on peut voir un premier mode de réalisation d'une liaison 6 selon la présente invention. Nous décrirons en détail la liaison 6, dite passive, mais la description s'applique aux autres liaisons 8.1, 8.2, dites actives.

La liaison 6 comporte une tige 12 d'axe longitudinal A, une tête 14 fixée à première extrémité 12.1 de la tige 12 et une embase 16 fixée à une deuxième extrémité 12.2 de la tige 12.

La tête est destinée à être solidarisée en rotation et en translation au support 2 ou au composant 4, et l'embase est destinée à être fixée en translation et en rotation au composant 4 ou au support 2.

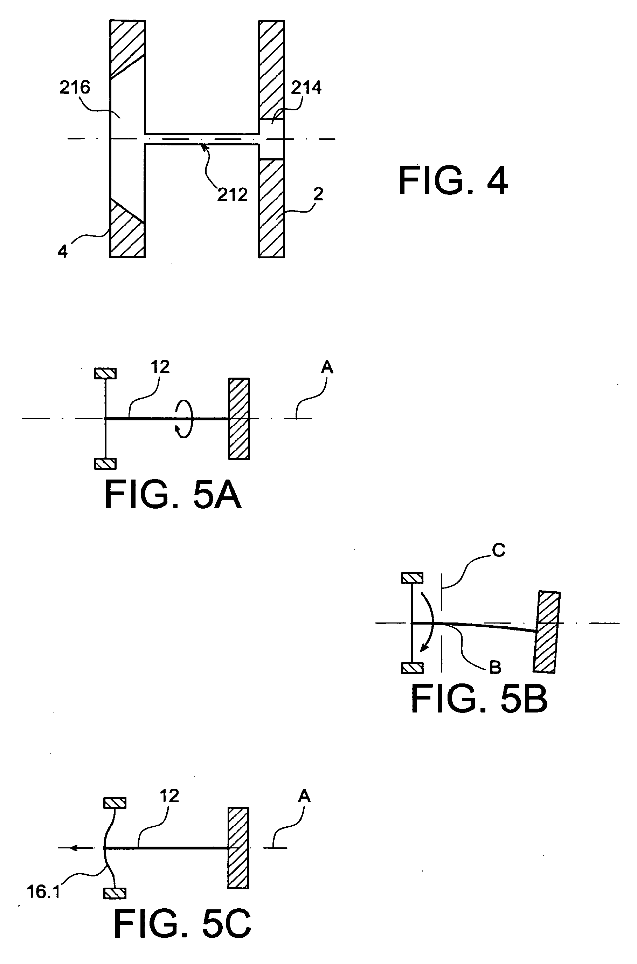

La tige 12 a un diamètre sensiblement plus petit que celui de la tête 14 et de l'embase 16, lui permettant une déformation élastique par torsion autour de son axe A, particulièrement visible sur la figure 5A, et par flexion autour de axes B et C. Sur la figure 5B, on peut voir la déformation par flexion de la liaison 6 autour de l'axe B.

Grâce aux possibilités de déformation élastique de la tige, la liaison 6 comporte trois degrés de liberté en rotation autour des axes A, B et C.

La liaison 6 selon la présente invention offre également un degré de liberté en translation le long de l'axe A, pour cela il est prévu que l'embase puisse se déformer.

Il est alors prévu que l'embase 16 ait sensiblement la forme d'un disque dont la zone centrale 16.1 est apte à se déformer élastiquement selon l'axe A, pour permettre à la tige 12 de se déplacer le long de l'axe A.

Dans l'exemple représenté, l'embase 16 comporte une zone centrale 16.1 amincie selon l'axe A, apte à se déformer préférentiellement selon la direction de l'axe A et une zone périphérique 16.2 apte à faciliter le montage de l'embase sur le support 2 ou le composant 6. Sur la figure 5C, cette déformation est schématisée.

La zone périphérique 16.2 a la forme d'une couronne d'épaisseur supérieure à celle de la zone amincie 16.1.

La zone centrale 16.1 a, lorsqu'elle est déformée, une forme sensiblement parabolique.

Grâce à la présente invention, on réalise une liaison linéaire annulaire dont les degrés de liberté en rotation et en translation sont obtenus par déformation élastique du ou des matériaux composant la liaison 6.

Dans l'exemple représenté, on assure la translation selon l'axe A grâce à une zone amincie. On pourrait également prévoir de rendre l'embase élastiquement déformable, en pratiquant des lumières radiales dans l'embase, ces lumières étant centrées sur la tige de manière à réduire la résistance à la déformation de l'embase.

Dans l'exemple représenté, la couronne 16.2 fait saillie par rapport à la zone amincie 16.1 du côté opposé à celui sur lequel est fixée la tige 12. On pourrait prévoir qu'elle fasse saillie du même côté que celui sur lequel la tige est fixée.

Sur les figures 5A à 5C, sont représentés les mouvements purs théoriques, en pratique la liaison subira une superposition de mouvements de rotation, de flexion et de translation, suivant le réglage imposé par les actionneurs.

La zone amincie 16.1 du fait de sa déformation participe également à la flexion de la liaison et permet de moins solliciter la tige 12

Sur la figure 3, on peut voir une réalisation pratique de la présente invention de la liaison de la figure 1.

Dans cet exemple, la tête 14 est fixée au support 2 et l'embase 16 est fixée au composant 4.

Le support 2 comporte un montant 2.1 en saillie d'un cadre 2.2, muni d'un alésage 18 dans lequel est fixée la tête 14.

Dans l'exemple représenté, la tête 14 comporte un filetage apte à coopérer avec un taraudage pratiqué dans l'alésage 18.

De manière avantageuse, l'alésage 18 est débouchant pour faciliter le serrage de la tête 14 dans l'alésage 18.

Tout type de fixation de la tête dans le montant 2.1 peut convenir, par exemple par collage, soudage, par vis de pression...

Une butée de serrage 20 est également avantageusement prévue sous forme d'une rondelle faisant saillie radialement de la tige 12 pour venir en appui contre le montant 2.1 et limiter le serrage de la tête 14 dans le montant 2.1.

L'embase 16 comporte avantageusement une forme tronconique, sa partie périphérique 16.2 étant délimitée par une surface radiale tronconique dont la plus grande section est orientée vers la tige 12.

Le composant 8 comporte un alésage 22 muni d'un fond 23 de forme tronconique correspondant à la forme tronconique de l'embase.

La forme extérieure de l'embase 16 permet d'une part d'assurer un auto-centrage lors du montage de la liaison dans le composant 4. D'autre part, elle assure un montage sans jeu. Par ailleurs, la liaison telle que représentée étant fixée sur le composant au moyen d'un écrou 24 vissé sur le composant, le contact cône sur cône assure, avec un faible effort de serrage, un effort radiale important évitant, tout glissement entre la liaison et le composant, et ceci que cela nécessite d'exercer des contraintes importantes risquant de déformer le composant 4.

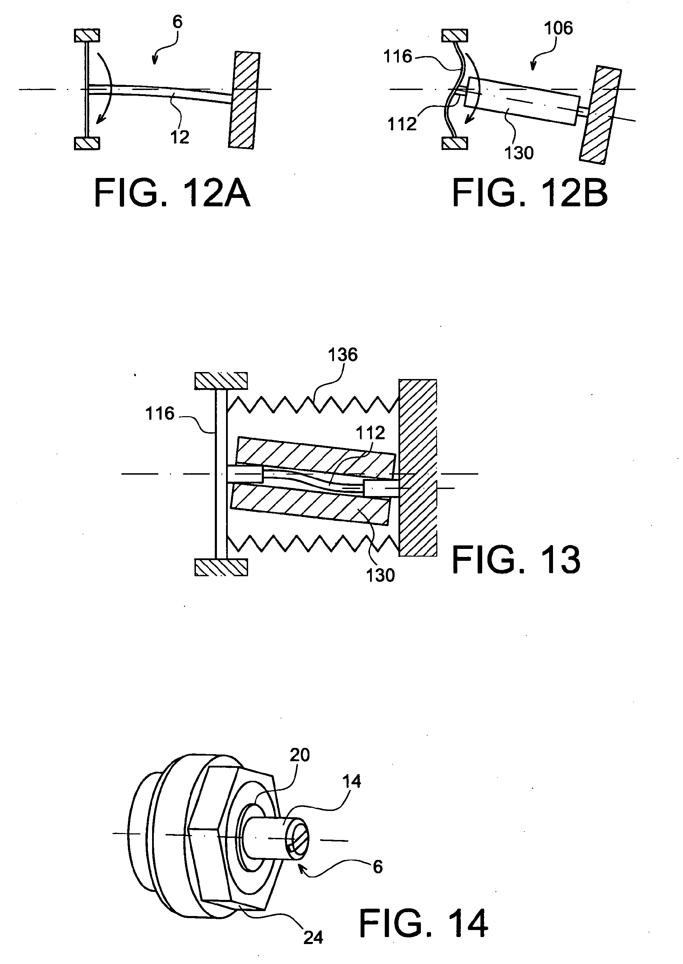

L'écrou est particulièrement visible sur la figure 14.

Dans l'exemple représenté, le montant 2.1 comporte une saillie 26 formant butée d'arrêt à l'opposée du cadre 2.2 en regard d'une extrémité extérieure 28 de l'écrou 24.

Ainsi, en cas de rupture accidentelle de la liaison 6, le composant 4 repose sur le montant 2.1, par l'intermédiaire de l'écrou et de la saillie 26, réduisant les risques d'endommagement du composant.

Sur la figure 3, on peut voir l'écrou monté autour de la liaison 6.

Dans l'exemple représenté, la liaison est d'un seul tenant, réalisée par exemple par moulage avec rectification ou par usinage directement.

On peut également prévoir de réaliser des liaisons composites associant plusieurs matériaux. Par exemple, la tige 12 peut être réalisée en corde à piano et soudée sur une embase 16 et une tête 14 en matériaux différents.

De manière générale, le ou les matériaux utilisés pour réaliser la liaison offre une haute limite élastique.

Dans le cas d'un dispositif optique, la limite élastique est supérieure à 1120-1400 MPa.

On peut utiliser, par exemple un acier avec ou sans traitement thermique, suivant les sollicitations de la liaison. A titre d'exemple, on peut utiliser l'acier à ressort, par exemple de l'acier 45SCD6.

Des matériaux synthétiques peuvent également être envisagés suivant l'application, du type polymère comme le PVC, dans ce cas la réalisation par moulage est particulièrement aisée.

L'embase peut avoir une forme de disque muni sur sa périphérie extérieure d'un filetage coopérant avec un taraudage réalisé dans l'alésage 22, un moyen d'arrêt pour éviter le dévissage pourra être prévu par exemple un frein filet ou une vis de pression.

On peut également envisager une fixation par collage, soudage ou tout autre moyen de fixation, dans ce cas il peut être avantageux de prévoir une embase de forme polygonale coopérant avec une forme correspondante dans l'alésage 22 pour éviter de manière simple toute rotation entre le composant et la liaison.

Dans un exemple de réalisation de liaison pour un dispositif optique, la tige a une longueur de 14 mm et un diamètre de 2 mm, l'embase 16 a un diamètre de 28 mm et sa zone centrale a une épaisseur de 1 mm.

Un dispositif, dans lequel la tête est fixée dans le composant mobile et l'embase est fixée dans le support, ne sort pas du cadre de la présente invention.

On pourrait également prévoir que la tête soit de la même forme que l'embase et qu'elle permette également une déformation de la liaison, selon l'axe de la tige.

Nous allons maintenant décrire plus en détail le dispositif représenté sur les figures 2A à 2C. Le dispositif permet de réaliser un déplacement en rotation du composant 4 autour de deux axes de rotation X et Y, orthogonaux entre eux et à une normale Z au composant 4.

De manière particulièrement avantageuse, le dispositif comporte trois liaisons 6, 8.1, 8.2 disposées en triangle de manière à assurer un montage isostatique du composant 4 sur le support 2.

Dans l'exemple représenté, les deux liaisons actives 8.1, 8.2 sont disposées d'un même côté du composant symétriquement par rapport à un plan médian P de ce côté et la liaison passive 6 est disposée sur le côté opposé dans le plan médian P.

Les actionneurs 9.1, 9.2 sont du type linéaire, permettant un déplacement de l'extrémité de la liaison 8.1, 8.2 qui leur est accrochée selon l'axe Z vers le haut ou vers le bas.

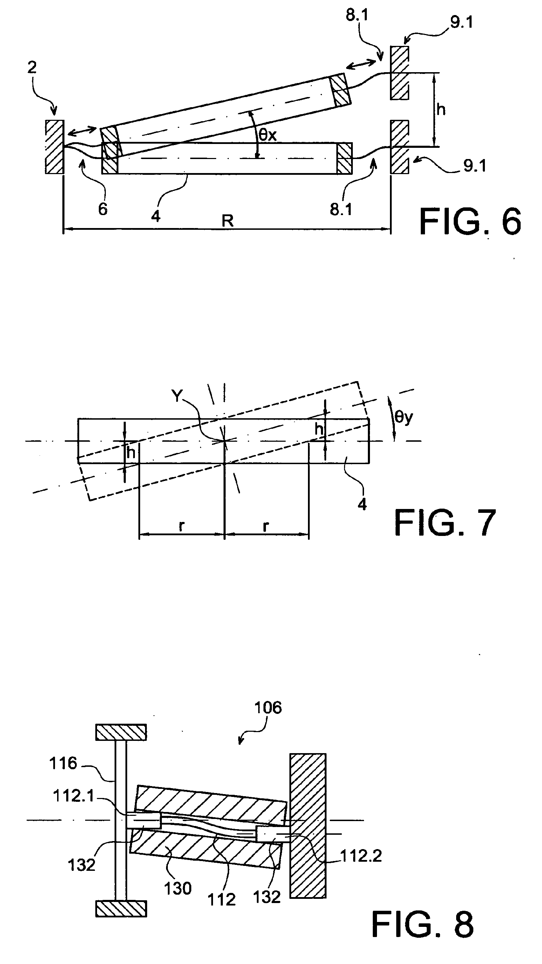

Ainsi si les deux actionneurs 9.1, 9.2 exercent un effort dans le même sens le long de l'axe Z sur chacune des liaisons, le composant 4 va pivoter autour de l'axe X, tel que cela est représenté sur la figure 6.

Lorsque les actionneurs se déplacent sur un distance h dans un même sens vers le haut, le composant va alors pivoter autour de l'axe X (représenté en pointillés) d'un angle θx.

L'étirement a subit par chacune des liaisons, représenté sur la figure 6, est alors :

$$\mathbf{a} = R/\cos(\theta x) - R \qquad\qquad (1)$$

R étant la distance entre le composant et le support au niveau de chaque liaison.

Par contre, lorsque les deux actionneurs se déplacent dans des sens opposés, ils exercent des efforts dans des sens opposés, le composant 4 va pivoter autour de l'axe Y (représenté en pointillés), comme cela est représenté sur la figure 7 où les actionneurs se déplacent en sens opposé d'une distance h.

La flexion subit **b** est alors égale à :

$$\mathbf{b} = r/\cos(\theta y) - r \qquad\qquad (2)$$

r étant la distance séparant chaque actionneur du plan médian P,

La disposition en triangle des liaisons selon la présente invention ainsi fixées au support et au composant permet de réaliser un maintien rigide. En effet, le mode de fixation est du type poutre « encastrée/encastrée », ce qui permet d'obtenir une rigidité importante, garantissant une bonne stabilité tout en gardant une souplesse de fonctionnement en flexion et en torsion. A titre de comparaison, la raideur en flexion est huit fois plus importante qu'une liaison du type poutre « encastrée/libre ».

Cette rigidité permet de rendre le dispositif moins sensible aux vibrations extérieures, ainsi les vibrations du composant optique du fait des vibrations extérieures sont réduites.

Par ailleurs, les liaisons selon la présente invention n'offrant que peu de couple résistant, le composant risque moins d'être déformé.

Sur la figure 8, on peut voir un deuxième exemple de réalisation dans lequel la liaison 106 comporte un tube rigide 130 disposé autour de la tige 112 et apte à se déplacer longitudinalement par rapport à elle, la tige 112 étant raccordée à une embase 116 déformable selon l'axe A et à une tête (non représentée).

Dans l'exemple représenté des embouts 132 sont fixés sur les extrémités 112.1, 112.2 de la tige de diamètre supérieur à celui de la tige et inférieur au diamètre intérieur du tube 130.

Ainsi, le tube 130 peut avoir un diamètre intérieur suffisamment grand pour coulisser librement sur la tige 112, tout en raidissant la tige 112 du fait de la coopération des embouts avec le passage intérieur du tube 130.comme cela est représenté sur la figure 8.

Le tube 130 reprend les efforts de charge statique du composant optique (masse de l'ensemble mobile) tout en laissant les mouvements libres.

Les mouvements générés par les mouvements relatifs entre le tube 130 et la tige n'engendrent pas de couple résistant important du fait du très petit diamètre du tube.

Le manchon 130 est par exemple réalisé en acier ou en laiton, offrant un faible coefficient de frottement avec la tige de la liaison.

De plus, comme cela est représenté sur la figure 13, un soufflet 136 peut être disposé autour du tube 130 et fixé au support et au composant optique afin d'isoler la liaison de l'environnement extérieur et éviter que des particules arrachées par frottement pollue le composant optique.

La liaison munie d'un tube et d'un soufflet d'isolation est particulièrement adaptée pour de dispositifs destinés à être utilisés en salle blanche, puisque toute contamination est confinée dans le soufflet.

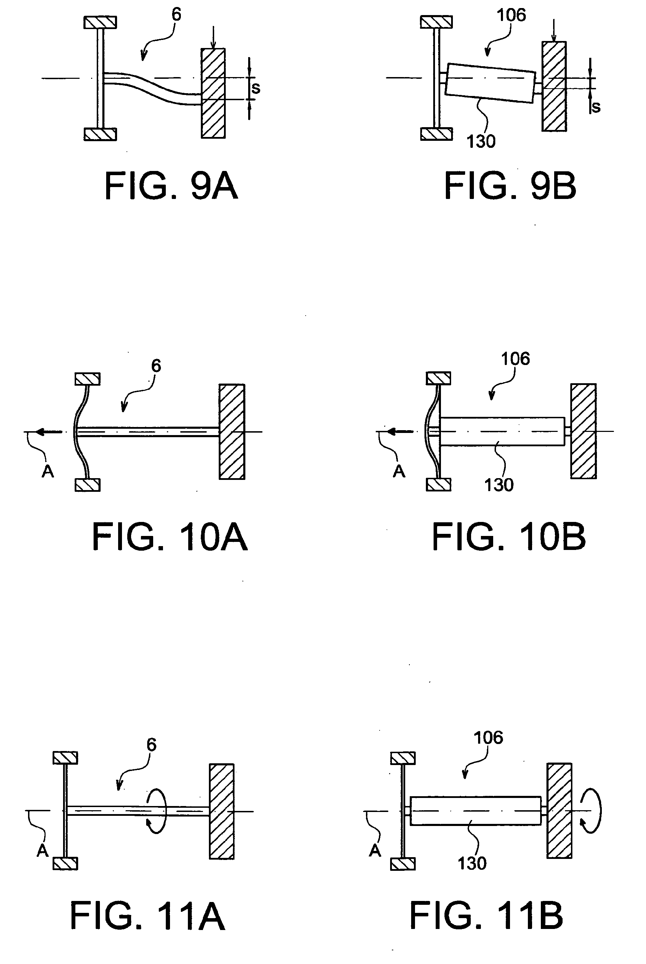

Sur les figures 9A à 12B, on peut voir les différences de comportement entre les deux exemples de réalisation de la liaison selon la présente invention.

Sur les figures 9A et 9B, la liaison est soumise à une déflexion statique, dans le cas de la liaison 106, la distance de déflexion S est réduite, comparativement à celle de la liaison 6.

Sur les figures 10A et 10B, la liaison est soumise à une translation selon l'axe A, les liaisons 6 et 106 ont le même comportement.

Sur les figures 11A et 11B, la liaison est soumise à une torsion autour de l'axe A, les liaisons 6 et 106 ont le même comportement.

Sur les figures 12A et 12B, la liaison est soumise à une rotation autour d'un axe orthogonal au plan de la feuille. Dans le cas de la liaison 6, c'est la tige 12 qui plie, par contre dans le cas de la liaison 106, c'est l'embase 116 qui se déforme pour permettre la rotation.

Le tube reprend la charge statique du composant optique. En outre, la position de l'axe de rotation est décalée vers l'embase 116.

La présente invention permettant de réaliser des déplacements de petites amplitudes, celle-ci est particulièrement adaptée pour effectuer des alignements optiques, des réglages précis.

Les réglages peuvent être effectués par des moyens motorisés ou manuellement.

Nous allons maintenant expliquer le montage d'une liaison selon la présente invention entre un support et un composant.

Le composant optique est formé d'une monture 34 et d'un élément optique 36 monté dans la monture 34.

Dans certains cas, les déformations dues à la charge statique sont très importantes par rapport aux déformations cinématiques dues aux courses des actionneurs (par exemple 4 à 5 fois plus importante avec un petit diamètre de tige). Par conséquent, il est particulièrement avantageux de monter d'abord les liaisons sur la monture 34 vide, puis de monter l'élément optique en dernier pour réduire ces couples résistants, qui peuvent déformer l'élément optique.

Ainsi le procédé de montage comporte les étapes :

- fixer les liaisons sur la monture vide 34,
- fixer les actionneurs sur le support,
- fixer les liaisons sur le support,
- monter l'optique dans sa monture en position horizontale,
- incliner l'élément optique ainsi formé dans la position d'utilisation,
- brider l'optique sur sa monture au moyen de contrebutées.

A titre d'exemple, pour un dispositif optique selon la présente invention comportant un composant optique de 15kg, grâce au montage décrit précédemment, le couple résistant résiduel n'est plus que de 0,06 N.m (avec un diamètre de tige de 1,5 mm) pour 0,27 N.m prévu pour un montage classique avec l'élément optique monté dans sa monture dés le départ.

La liaison selon la présente invention est de forme simple, elle est alors très intéressante à la fois sur un plan technique et sur un plan économique.

En effet, cette liaison déformable, bien adaptée pour des petits déplacements, offre les avantages suivants :

- la liaison est sans jeu, du fait de son aptitude à se déformer élastiquement,
- elle ne nécessite pas d'entretien, aucun graissage n'est requis puisqu'elle ne comporte aucune pièce en mouvement,
- elle fonctionne sans à-coup puisqu'elle est composée d'une seule pièce,
- son montage est facile et rapide, ce qui réduit les coûts de fabrication,
- la liaison permet de rigidifier le montage du composant optique à un premier mode de l'ordre de 20-30Hz, au-dessus du mode d'excitation sismique de l'ordre de 10 Hz. Par exemple, dans le cas où l'on souhaite réaliser des alignements de grande précision pour un dispositif laser, le ou les composants optiques ne vibrent pas du fait de vibrations naturelles,

- elle est légère et peu encombrante relativement aux rotules de l'état de la technique,
- sa réalisation permet de minimiser l'utilisation de matériaux prohibés dans certaines applications, en effet la masse de la tige est réduite, par exemple 0,3 g dans l'exemple représente, ce qui réduit les rayonnements. Par ailleurs, l'utilisation du téflon, qui est parfois interdite dans certaine application, n'est pas nécessaire dans la présente invention, puisqu'il n'ya pas de pièce en mouvement,
- le coût de fabrication est très bas, du fait de la simplicité de réalisation et de la possibilité de fabrication en grande série,
- grâce à sa structure très simple, des liaisons de rechange pourront être fabriquées pendant une longue période, ce qui assure la pérennité des dispositifs équipés de telles liaisons,
- elle est par ailleurs facilement adaptable à tout dispositif sans requérir de modification importante,
- elle ne nécessite pas de pièces d'interface avec les actionneurs, une seule pièce assure les quatre degrés de liberté,
- cette liaison minimise les couples résistants ou parasites, ce qui permet sa mise en oeuvre dans le domaine optique où les composants sont très fragiles,
- cette liaison est utilisable en salle blanche, puisqu'elle ne génère pas de particules du fait de l'absence de déplacement de pièce entre elles, ou dans le cas de la liaison munie d'un tube et d'un soufflet, ce dernier assure le confinement des particules susceptibles d'être générés par les frottements,
- elle est de durée de vie très élevée pour des petits déplacements,
- elle est insensible à des environnements sévères, tels que des environnements humides, du brouillard salin, des températures élevées ou basses, rayonnement intenses...,
- elle est insensible au vide, elle peut donc être utilisée dans des caissons à vide car elle n'est pas à l'origine de dégazage.

La liaison selon la présente invention peut être mise en oeuvre dans dispositifs pour les réglages d'orientation précis d'un objet, avec ou sans actionneur

La liaison peut s'appliquer à de nombreux domaines optiques et particulièrement sur des chaînes laser.

La liaison peut également permettre l'alignement d'optiques sur des chaînes lasers qui mettent en oeuvre de nombreux composants optiques réglables.

La liaison selon l'invention peut également être utilisée dans le domaine de la télécommunication, pour le réglage d'antennes ou de sources diverses, dans le domaine thermique, pour le réglage précis réguliers de capteurs ou panneaux solaires dans des conditions sévères d'environnement.

Cette liaison peut aussi être utilisée dans le domaine des satellites, puisqu'elle est insensible au vide, elle possède une durée de vie importante, ne nécessite pas d'entretien et est très légère.

Elle peut également être utilisée dans tout dispositif requérant des mouvements de faibles amplitudes, par exemple en nautisme pour modifier la position d'un mât.

Sur la figure 4, on peut voir une liaison sans pièce en mouvement comportant trois degré de liberté en rotation obtenue par la tige 212, l'embase 216 étant rigide et n'autorisant pas un degré de liberté en translation selon la direction de la tige 212. La liaison comporte également une tête 214 à son autre extrémité.

On pourrait donc prévoir, par exemple, dans le cas du dispositif optique mettant en oeuvre trois liaisons, une liaison formant uniquement rotule comme décrite ci-dessus et représentée à la figure 4 et deux liaisons de la figure 1 assurant une liaison linéaire annulaire afin d'obtenir une meilleure stabilité du composant optique dans sa monture. L'embase 216 est fixée sur le composant 4 et la tête 214 est fixée sur le support 2.

**Revendications**

1. Liaison destinée à raccorder un premier et un deuxième élément, apte à autoriser de petits déplacements entre les premier et deuxième éléments, ladite liaison étant formée par au moins un matériau apte à se déformer élastiquement, ladite liaison comportant une partie centrale (12, 112) de faible dimension transversale apte à se déformer élastiquement en flexion et des première (16) et deuxième (14) parties d'extrémités fixées à des extrémités longitudinales (12.1, 12.2) de ladite partie centrale (12, 112), au moins la première partie d'extrémité (16) étant apte à se déformer élastiquement au moins dans une direction longitudinale reliant les extrémités longitudinales (12.1, 12.2) de la partie centrale (12), ladite liaison formant une liaison linéaire annulaire, **caracterisé en ce que** la partie centrale est apte à se déformer élastiquement en torsion.

2. Liaison selon la revendication 1, dans laquelle la partie centrale (12) est une tige et dans laquelle la première partie d'extrémité (16), formant une embase, comporte une zone centrale (16.1) amincie relativement à une zone périphérique (16.2), la tige (12) étant fixée à cette zone amincie (16.1).

3. Liaison selon la revendication 2, dans laquelle la zone périphérique (16.2) est de forme tronconique dont la plus grande base est orientée du côté de la tige, la zone périphérique (16.2) formant une couronne autour de la zone amincie (16.1).

4. Liaison selon l'une des revendications 1 à 3, comportant un manchon (130) rigide monté avec jeu autour de la partie centrale (112), de manière à permettre un déplacement relatif entre le manchon (130) et la partie centrale (112).

5. Liaison selon l'une des revendications 1 à 4, dans laquelle la partie centrale (12, 112) est réalisée en corde à piano et est fixée aux premières (16) et deuxième (14) parties d'extrémité, par exemple par soudage.

6. Liaison selon l'une des revendications 1 à 5, réalisée en acier, par exemple en acier 45SCD6.

7. Liaison selon l'une des revendications 1 à 6, dans lequel le ou les matériaux composant la liaison ont une limite élastique supérieure à 1120-1400 MPa.

8. Dispositif comportant un support (2) et un composant (4) fixé au support (2) et apte à être déplacé par rapport au dit support (2), ledit composant étant fixé au dit support par au moins une liaison (6, 8.1, 8.2) selon l'une quelconque des revendications précédentes, ladite liaison (6, 8.1, 8.2) étant encastrée à une extrémité dans le support (2) et à une autre extrémité dans le composant (4).

9. Dispositif selon la revendication 8, dans lequel le composant (4) est fixé au support (2) par trois liaisons (6, 8.1, 8.2) selon l'une quelconque des revendications 1 à 7.

10. Dispositif selon la revendication 8, dans lequel le composant (4) est fixé au support (2) par au moins une liaison (6, 8.1, 8.2) selon l'une quelconque des revendications 1 à 7 et au moins une liaison formée par une tige encastrée à une extrémité dans le support (2) et à une autre extrémité dans le composant (4).

11. Dispositif selon l'une des revendications 8 à 10, comportant au moins un actionneur disposé entre une extrémité d'une liaison (8.1, 8.2) et le support (2), ledit actionneur étant destiné à déplacer ladite extrémité de la liaison (8.1, 8.2) par rapport au support (2).

12. Dispositif selon l'une des revendications 8 à 11, dans lequel le composant (4) est de forme rectangulaire, deux liaisons (8.1, 8.2) étant fixées à un premier côté du composant (4) et une liaison (6) étant fixée sur un deuxième côté opposé au premier côté.

13. Dispositif selon la revendication 12 en combinaison avec la revendication 11, dans lequel les deux liaisons (8.1, 8.2) du même côté sont montées sur des actionneurs.

14. Dispositif selon la revendication 11 à 13, dans lequel ledit au moins un actionneur est du type linéaire.

15. Dispositif selon l'une des revendications 8 à 14, dans lequel la première partie d'extrémité (16) est fixée sur le composant (4) ou sur le support par serrage de ladite première partie d'extrémité (16) au moyen d'un écrou dans un alésage du composant (4) ou du support (2) et l'autre partie d'extrémité (14) est fixée par vissage dans un alésage du support (2) ou du composant (4).

16. Dispositif dans lequel l'alésage recevant la première partie d'extrémité (16) comporte un fond ayant une forme tronconique correspondant à celle de la première partie d'extrémité (16) de la liaison selon la revendication 3.

17. Dispositif selon l'une des revendications 8 à 16, dans lequel le composant (4) est un composant optique.

18. Procédé de fabrication d'un dispositif selon l'une quelconque des revendications 8 à 17, comportant les étapes de :

    a) fixation d'au moins une liaison sur le composant,
    b) fixation de la liaison sur le support.

19. Procédé de fabrication selon la revendication précédente, dans lequel lors de l'étape b) au moins un actionneur est fixé sur le support entre la liaison et le support.

**20.** Procédé de fabrication selon la revendication 18 ou 19, le composant comportant une monture et un élément monté dans la monture, dans lequel procédé lors de l'étape a), les liaisons sont fixées sur la monture de l'élément en l'absence de l'élément, l'élément étant monté dans la monture après la fixation des liaisons sur le support.

**21.** Procédé selon l'une des revendications 18 à 20, dans lequel le composant est mis en position horizontale, puis incliné dans la position d'utilisation, l'élément étant bridé sur la monture au moyen de contrebutées.

**Claims**

**1.** A connection intended to connect a first and a second element, capable of allowing small displacements between the first and second elements, said connection being formed by at least one material capable of deforming elastically, said connection including a central portion (12, 112) of a small transverse dimension capable of deforming elastically in flexure and first (16) and second (14) end portions attached to longitudinal ends (12.1, 12.2) of said central portion (12, 112), at least the first end portion (16) being capable of deforming elastically at least in one longitudinal direction connecting the longitudinal ends (12.1, 12.2) of the central portion (12), said connection forming an annular linear joint, **characterized in that** the central portion is capable of deforming elastically in torsion.

**2.** The connection according to claim 1, wherein the central portion (12) is a rod and wherein the first end portion (15), forming a base, includes a central area (16.1) thinned relatively to a peripheral area (16.2), the rod (12) being attached to this thinned area (16.1).

**3.** The connection according to claim 2, wherein the peripheral area (16.2) is of a frusto-conical shape, the largest base of which is oriented on the side of the rod, the peripheral area (16.2) forming a crown around the thinned area (16.1).

**4.** The connection according to any of claims 1 to 3, including a rigid sleeve (130) mounted with play around the central portion (112), so as to allow a relative displacement between the sleeve (130) and the central portion (112).

**5.** The connection according to any of claims 1 to 4, wherein the central portion (12, 112) is made in piano wire and is attached to the first (16) and second (14) end portions, by welding for example.

**6.** The connection according to any of claims 1 to 5, made in steel, in 45SCD6 steel for example.

**7.** The connection according to any of claims 1 to 6, wherein the material(s) making up the connection have yield strength above 1,120-1,400 MPa.

**8.** A device including a support (2) and a component (4) attached to the support (2) and capable of being displaced relatively to said support (2), said component being attached to said support through at least one connection (6, 8.1, 8.2) according to any of the preceding claims, said connection (6, 8.1, 8.2) being fitted into an end in the support (2) and into another end in the component (4).

**9.** The device according to claim 8, wherein the component (4) is attached to the support (2) through three connections (6, 8.1, 8.2) according to any of claims 1 to 7.

**10.** The device according to claim 8, wherein the component (4) is attached to the support (2) through at least one connection (6, 8.1, 8.2) according to any of claims 1 to 7 and at least one connection formed by a rod fitted into an end in the support (2) and into another end in the component (4).

**11.** The device according to any of claims 8 to 10, including at least one actuator positioned between one end of a connection (8.1, 8.2) and the support (2), said actuator being intended to displace said end of the connection (8.1, 8.2) relatively to the support (2).

**12.** The device according to any of claims 8 to 11, wherein the component (4) is of a rectangular shape, two connections (8.1, 8.2) being attached to a first side of the component (4) and a connection (6) being attached onto a second side opposite the first side.

**13.** The device according to claim 12 combined with claim 11, wherein both connections (8.1, 8.2) on the same side are mounted on actuators.

14. The device according to claim 11 to 13, wherein said at least one actuator is of the linear type.

15. The device according to any of claims 8 to 14, wherein the first end portion (16) is attached onto the component (4) or on the support by tightening said first end portion (16) by means of a nut in a bore of the component (4) or of the support (2) and the other end portion (14) is attached by screwing into a bore of the support (2) or of the component (4).

16. A device wherein the bore receiving the first end portion (16) includes a bottom having a frusto-conical shape corresponding to that of the first end portion (16) of the connection according to claim 3.

17. The device according to any of claims 8 to 16, wherein the component (4) is an optical component.

18. A method for manufacturing a device according to any of claims 8 to 17, including the steps of:

    a) attaching at least one connection on the component,
    b) attaching the connection onto the support.

19. The manufacturing method according to the preceding claim, wherein during step b) at least one actuator is attached onto the support between the connection and the support.

20. The manufacturing method according to claim 18 or 19, the component including a mount and an element mounted in the mount, method in which during step a) the connections are attached on the mount of the element in the absence of the element, the element being mounted in the mount after attachment of the connections onto the support.

21. The manufacturing method to any of claims 18 to 20, wherein the component is set in a horizontal position, and then tilted in the position of use, the elements being clamped on the mount by means of counter-abutments.


**Patentansprüche**

1. Verbindung, bestimmt zum Verbinden eines ersten und eines zweiten Elements und fähig kleine Verschiebungen zwischen dem ersten und dem zweiten Element zuzulassen, wobei die genannte Verbindung durch wenigstens ein elastisch verformbares Material gebildet wird und einen elastisch biegeverformbaren Mittelteil (12, 112) von geringer Querausdehnung sowie erste (16) und zweite (14) Endteile umfasst, befestigt an Längsenden (12.1, 12.2) des genannten Mittelteils (12, 112), wobei wenigstens der erste Endteil (16) elastisch verformbar ist, zumindest in einer die Längsende (12,1, 12.2) des Mittelteils (12) verbindenden Längsrichtung, wobei die genannte Verbindung eine Linear-Ring-Verbindung bildet,
**dadurch gekennzeichnet, dass** der Mittelteil elastisch torsionverformbaren ist.

2. Verbindung nach Anspruch 1, bei der der Mittelteil (12) eine Stange ist, und bei der der einen Sockel bildende erste Endteil (16) einen zentralen, in Bezug auf einen peripheren Teil (16.2) dünnen Bereich (16,1) umfasst, wobei die Stange (12) an diesem dünnen Bereich (16.1) befestigt ist.

3. Verbindung nach Anspruch 2, bei der der periphere Bereich (16.2) die Form eines Kegelstumpfs aufweist, dessen größten Grundfläche sich auf der Seite der Stange befindet und dessen peripherer Bereich (16.2) einen Kranz um den dünnen Bereich (16.1) herum bildet.

4. Verbindung nach einem der Ansprüche 1 bis 3, eine mit Spiel um den zentralen Teil (112) herum montierte starre Hülse (130) umfassend, sodass eine Relativverschiebung zwischen der Hülse (130) und dem zentralen Teil (112) möglich ist.

5. Verbindung nach einem der Ansprüche 1 bis 4, bei dem der zentrale Teil (12, 112) aus Stahldraht realisiert ist und an den ersten (16) und zweiten (14) Endteilen befestigt ist, zum Beispiel durch Schweißen.

6. Verbindung nach einem der Ansprüche 1 bis 5, zum Beispiel aus Stahl des Typs 45SCD6.

7. Verbindung nach einem der Ansprüche 1 bis 6, bei der das (oder die) die Verbindung bildende(n) Material(ien) eine Elastizitätsgrenze über 1120-1400 MPa haben.

8. Vorrichtung mit einem Träger (2) und einem an dem Träger (2) befestigten Bauteil (4), das in Bezug auf den Träger (2) verschoben werden kann, wobei das genannte Bauteil an dem genannten Träger mittels wenigstens einer Verbindung (6, 8.1, 8.2) nach einem der vorhergehenden Ansprüche befestigt ist und die genannte Verbindung (6, 8.1, 8.2) dabei mit einem Ende in dem Träger (2) eingespannt ist und mit einem anderen Ende in dem Bauteil (4).

9. Vorrichtung nach Anspruch 8, bei der das Bauteil (4) durch drei Verbindungen (6, 8.1, 8.2) nach einem der Ansprüche 1 bis 7 an dem Träger (2) befestigt ist.

10. Vorrichtung nach Anspruch 8, bei der das Bauteil (4) durch wenigstens eine Verbindung (6, 8.1, 8.2) nach einem der Ansprüche 1 bis 7 und wenigstens eine durch eine Stange gebildete Verbindung an dem Träger (2) befestigt ist, die mit einem Ende in dem Träger (2) und mit einem anderen Ende in dem Bauteil (4) eingespannt ist.

11. Vorrichtung nach einem der Ansprüche 8 bis 10, mit wenigstens einem Aktor, angeordnet zwischen einem Ende einer Verbindung (8.1, 8.2) und dem Träger (2), wobei der genannte Aktor dazu bestimmt ist, das genannte Ende der Verbindung (8.1, 8.2) in Bezug auf den Träger (2) zu verschieben.

12. Vorrichtung nach einem der Ansprüche 8 bis 11, bei der das Bauteil (4) von rechteckiger Form ist, wobei zwei Verbindungen (8.1, 8.2) auf einer ersten Seite des Bauteils (4) befestigt sind, und eine Verbindung (6) auf einer der ersten Seite entgegengesetzten zweiten Seite befestigt ist.

13. Vorrichtung nach Anspruch 12 in Kombination mit Anspruch 11, bei der die zwei Verbindungen (8.1, 8.2) derselben Seite auf Aktoren montiert sind.

14. Vorrichtung nach Anspruch 11 bis 13, bei der der genannte wenigstens eine Aktor vom linearen Typ ist.

15. Vorrichtung nach einem der Ansprüche 8 bis 14, bei der der erste Endteil (16) an dem Bauteil (4) oder an dem Träger befestigt ist, indem dieser erste Endteil (16) mittels einer Schraube in einer Bohrung des Bauteils (4) oder des Trägers (2) festgespannt ist und der andere Endteil (14) durch Verschraubung in einer Bohrung des Trägers (2) oder des Bauteils (4) befestigt ist.

16. Vorrichtung bei der die den ersten Endteil (16) aufnehmende Bohrung einen Boden mit der Form eines Kegelstumpfs hat, die derjenigen des ersten Endteils (16) der Verbindung nach Anspruch 3 entspricht.

17. Vorrichtung nach einem der Ansprüche 8 bis 16, bei der das Bauteil (4) ein optisches Bauteil ist.

18. Herstellungsverfahren einer Vorrichtung nach einem der Ansprüche 8 bis 17, folgende Schritte umfassend:

     a) Befestigung von wenigstens einer Verbindung an dem Bauteil,
     b) Befestigung der Verbindung auf dem Träger.

19. Herstellungsverfahren nach dem vorhergehenden Anspruch, bei dem während des Schritts b) wenigstens ein Aktor zwischen der Verbindung und dem Träger am Träger befestigt wird.

20. Herstellungsverfahren nach Anspruch 18 oder 19, wobei das Bauteil eine Fassung und ein in die Fassung montiertes Element umfasst und dabei in diesem Verfahren in Schritt a) die Verbindungen an der Fassung des noch nicht montierten Elements befestigt werden und das Element nach der Befestigung der Verbindungen an dem Träger in die Fassung montiert wird.

21. Verfahren nach einem der Ansprüche 18 bis 20, bei dem das Bauteil in die horizontale Lage gebracht und dann in die Benutzungslage geneigt wird, wobei das Element mit Hilfe von Gegenanschlägen an der Fassung festgehalten wird.

## FIG. 1

## FIG. 2A

## FIG. 2B

FIG. 2C

FIG. 3

216

214

212

2

4

FIG. 4

12

A

FIG. 5A

C

B

FIG. 5B

12

A

16.1

FIG. 5C

FIG. 6

FIG. 7

FIG. 8

FIG. 9A

FIG. 9B

FIG. 10A

FIG. 10B

FIG. 11A

FIG. 11B

FIG. 12A

FIG. 12B

FIG. 13

FIG. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8505464 A